# EUROPEAN PATENT SPECIFICATION

(11) **EP 1 317 179 B1**
(45) Date of publication and mention of the grant of the patent: **02.06.2004**
(21) Application number: 01974577.7
(22) Date of filing: 04.09.2001
(51) Int. Cl.: A01N 41/10, C05G 3/02

(54) **MESOTRIONE FORMULATIONS**
MESOTRION-FORMULIERUNGEN
FORMULATIONS A BASE DE MESOTRIONE

(30) Priority: 08.09.2000 US 231007 P; 11.09.2000 US 231796 P
(43) Date of publication of application: 11.06.2003
(73) Proprietor: Syngenta Participations AG, 4058 Basel (CH)
(72) Inventor: Wichert, Rex Alan, Syngenta Crop Protection Inc., Greensboro, NC 27409 (US); Beckett, Thomas Homer, Syngenta Crop Protect. Inc., Greensboro, NC 27409 (US)
(74) Representative: Swift, Jane Elizabeth Berrisford
(86) International application number: PCT/IB2001/001894
(87) International publication number: WO 2002/019823

(56) References cited:
- WO-A-00/30447
- WO-A-92/19107
- WO-A-95/17094
- WO-A-97/48276
- WO-A-99/63823
- DATABASE CROPU [Online] T.H.BECKETT ET AL.: "Mesotrione - postemergence performance in weed control programs in the Midwest" retrieved from STN-INTERNATIONAL, accession no. 2001-81556 CROPU XP002197439 & PROC.NOTH CENT.WEED SCI.SOC., vol. 54, 1999, page 95
- DATABASE CROPU [Online] T.H.BECKETT ET AL.: "ZA1296: a versatile postemergence broadleaf herbicide for corn" retrieved from STN-INTERNATIONAL, accession no. 1999-85298 CROPU XP002197440 & ABSTR.MEET.WEED SCI.SOC.AM., vol. 39, 1999, pages 65-66,
- DATABASE CROPU [Online] B.G.YOUNG ET AL.: "Optimizing foliar activity of isoxaflutole on giant foxtail with various adjuvants" retrieved from STN-INTERNATIONAL, accession no. 1999-81817 CROPU XP002197441 & PROC.NORTH CENT.WEED SCI.SOC., vol. 52, 1997, pages 104-105,

## Description

Mesotrione, (2-[4-methylsulfonyl-2-nitrobenzoyl-1,3-cyclohexane dione), is a new broadleaf weed herbicide being developed for post emergence and preemergence use in corn. Adjuvants are highly preferred in order to optimise its post emergence activity.

Proc. North. Cent. Weed Sci. Soc., vol. 54, 1999, p.95; Abstr. Meet. Weed Sci. Soc. Am., vol. 39, 1999, p 65-66; and Proc. North Cent. Weed Sci. Soc., vol. 52, 1997, p 104-105 all disclose the use of herbicidal formulations comprising crop oil concentrate alone or with urea ammonium nitrate fertilizer.

WO0092/19107 discloses a herbicidal composition comprising a substituted cyclohexanedione and at least one nitrogen containing fertilizer.

WO99/63823 discloses a herbicidal mixture containing a 3-heterocyclyl-substituted benzoyl derivative, a nitrogen containing fertilizer and an adjuvant.

WO95/1709 discloses a herbicidal composition comprising a diphenyl ether, at least one nitrogen containing fertilizer and one or more adjuvants.

Glasshouse and field experiments have been conducted to evaluate weed and crop response to mesotrione applied post emergence with several adjuvant systems. Rates of mesotrione ranged from 50 to 140 g active ingredient (ai) per acre (A) (i.e. ca. 12,3-34.6 mg per m²). Adjuvant systems tested include;
(i) no adjuvant (control),
(ii) crop oil concentrate (COC),
(iii) non-ionic surfactant (NIS), and
(iv) methylated seed oil (MSO),
each with and without urea ammonium nitrate (UAN) and ammonium sulphate (AMS) fertilizers.

The average crop response to mesotrione applied with crop oil concentrate plus ammonium nitrate or ammonium sulphate at 105 g active ingredient per hectare (ha) is less than 2% with a maximum injury of less than 10% in over 96% of the experiments.

The use of methylated seed oil with mesotrione increases the potential for crop injury. The average crop response to mesotrione applied with MSO plus UAN or AMS at 105 g active ingredient per hectare (ha) was only 3%, but injury was greater than 15% in more than 15% of the trials. In a series of trials where broadleafweed control was challenged by large difficult-to-control weeds, mesotrione applied with COC plus UAN or AMS and mesotrione applied with MSO plus UAN or AMS gave similar levels of control. Mesotrione applied with NIS plus UAN or AMS tended to give less control than the combinations with COC or MSO. Experiments also show that varying water quality and application volumes have little or no impact on the activity of mesotrione when applied at recommended rates with these adjuvant systems.

Data from these experiments show that in order to optimise weed control and minimize crop response with mesotrione, the preferred adjuvant system is COC plus UAN. However, if efficacy with acceptable sacrifice in crop damage is the desired result, mesotrione plus MSO and UAN or AMS is the formulation of choice.

Thus, in a first aspect, the present invention provides a herbicidal formulation comprising
(A) (2-[4-methylsulfonyl-2-nitrobenzoyl]-1,3-cyclohexanedione),
(B) about 0.3 to about 2.5 percent of crop oil concentrate or about 0.3 to about 2.5 percent of methylated seed oil, on a volume to volume basis, based on the total of (A), (B), (C) and (D),
(C) about 0.5 to about 5% of a urea ammonium nitrate on a volume to volume basis, based on the total of (A), (B), (C) and (D), or about 0.5 to 5 % based on dry weight, of ammonium sulphate fertilizer, based on the total weight of (A), (B), (C) and (D), and
(D) a diluent

Preferably, the mesotrione is utilized in an amount of about 1 ounce (28g) to 6 ounces (170g) per acre; the amount utilized per 100 (US) gallons (380 litres) of solution would thus correspond to how many gallons of solution would be applied on a per acre basis. Such amounts would ordinarily vary from about 3 ounces (85g) in 5 gallons (19 l) to about 3 ounces (85g) in 30 gallons (114 l). In a typical formulation, based on a 100 gallon (380 l) sample of the formulation, about 3 ounces (85g) of mesotrione will be utilized for post-emergent use, and about 5-6 ounces (142-170g) for preemergent usage.

The term "crop oil concentrate" is a well known term in the herbicide art and denotes mixtures of petroleum oils and non-ionic surfactants, preferably containing at least about 79% by weight of petroleum oil. There are numerous commercially available crop oil concentrate products, including, for example AGRI-DEX, PENETRATOR, and PENETRATOR PLUS and from Helena Chemical Company, HER-BIMAX from UAP, ES CROP OIL PLUS from Gromark, and CROP OIL PLUS, from Wilfarm, (83% parafinic oil, 17% emulsifier surfactant). In addition, US Patent No 5,238,604 describes certain adjuvant systems and crop oil concentrate products.

Preferred amounts of crop oil concentrate are 0.5 to 2%, most preferably about 1 % on a volume to volume basis.

Methylated Seed Oil is also commercially available. Examples include DESTINY from Cenex, methylated seed oil from Loveland, methylated seed oil from Helena Chemical, METH OIL from Riverside, PERSIST from Precision, SCOIL from Agsco, SUNDANCE II from Rosens, SUNIT-2 from American Cyanamid and SUPERB from Wilfarm.

In addition, commercial versions of the methylated seed oil are also sold as combinations with either UAN or AMS, for example PERSIST PLUS and PERSIST EXTRA from Precision (MSO plus UAN) and DYNE-A-PAK, from Helena Chemical (MSO plus UAN).

Preferably, the methylated seed oil is utilized in an amount of about 0.5 to 2.0 percent, on a volume-to-volume basis with the mesotrione, more preferably about 1 percent.

Preferably, about 1 to 3%, more preferably 1 to 2% of urea ammonium nitrate fertilizer is used. Preferably about 0.5% to 2% of ammonium sulphate is used.

The diluent is generally comprised of water. It is also possible to use other additives, for example buffers, to control pH. pH buffer substances are substances known to the person skilled in the art. A pH buffer substance is a mixture of a weak acid with a gallon (380 l) sample of the formulation, about 3 ounces (85g) of mesotrione will be utilized for post-emergent use, and about 5-6 ounces (142-170g) for preemergent usage.

The term "crop oil concentrate" is a well known term in the herbicide art and denotes mixtures of petroleum oils and non-ionic surfactants, preferably containing at least about 79% by weight of petroleum oil. There are numerous commercially available crop oil concentrate products, including, for example AGRI-DEX, PENETRATOR, and PENETRATOR PLUS and from Helena Chemical Company, HER-BIMAX from UAP, ES CROP OIL PLUS from Gromark, and CROP OIL PLUS, from Wilfarm, (83% parafinic oil, 17% emulsifier surfactant). In addition, US Patent No 5,238,604 describes certain adjuvant systems and crop oil concentrate products.

Preferred amounts of crop oil concentrate are 0.5 to 2%, most preferably about 1 % on a volume to volume basis.

Methylated Seed Oil is also commercially available. Examples include DESTINY from Cenex, methylated seed oil from Loveland, methylated seed oil from Helena Chemical, METH OIL from Riverside, PERSIST from Precision, SCOIL from Agsco, SUNDANCE II from Rosens, SUNIT-2 from American Cyanamid and SUPERB from Wilfarm.

In addition, commercial versions of the methylated seed oil are also sold as combinations with either UAN or AMS, for example PERSIST PLUS and PERSIST EXTRA from Precision (MSO plus UAN) and DYNE-A-PAK, from Helena Chemical (MSO plus UAN).

Preferably, the methylated seed oil is utilized in an amount of about 0.5 to 2.0 percent, on a volume-to-volume basis with the mesotrione, more preferably about 1 percent.

Preferably, about 1 to 3%, more preferably 1 to 2% of urea ammonium nitrate fertilizer is used. Preferably about 0.5% to 2% of ammonium sulphate is used.

The diluent is generally comprised of water. It is also possible to use other additives, for example buffers, to control pH. pH buffer substances are substances known to the person skilled in the art. A pH buffer substance is a mixture of a weak acid with a virtually completely dissociated salt of this acid and/or a mixture of a weak base with a-virtually completely dissociated salt of this base (see, for example, Rompps Chemie Lexikon (Rompp's Chemical Encyclopedia), 7th edition, volume 5, head word 'Buffer"). The pH of the buffer hardly changes on addition of acids or bases.

Preferred buffer substances in the preferred pH range from about 4 to about 11 are, for example, buffers which contain the following ions; acetate, phosphate, borate, carbonate, citrate, dietbylmalonate, nitrilo-trismethylenephosphate. Zwitterionic buffers, such as, for example, glycine buffer or 2-(N-morpholino) ethanesulfonic acid (MES) are also suitable. The buffer used generally depends on the pH range, for example phthalate is typically used at a pH range of about 3 to about 4, acetate is typically used at a pH range of about 4 to about 5.5, phosphate is typically used at a pH range of about 5.5 to about 7.5, and carbonate is typically used at a pH range of about 9 to about 10. A pH buffer acetate system is employed in concentrations such that the concentration in the formulation is about 0.1 to about 0.3 mol/l, preferentially about 0.15 to about 0.25 mol/l. A pH-buffering acetate system is actually built in the 'Mesotrione/Acetochlor Premix' formulation at the specified molar ranges. For each buffer system the molar range is different and system specific, however, based on the buffering strength at the working pH range.

Further examples of commercially available buffer agents and adjuvants include, but are not limited to BUFFER PS from Helena, which includes alkyl-p-arylpolyethoxyethanol phosphates and organic phosphoric acid, typically utilized at a concentration of about 0.5 to about 4 pt (about 0.24 to 1.91) per 100gal (3801), BUFFER EXTRA STRENGTH from Helena, which includes a blend of alkylarylpolyethoxyethanol phosphates and organic phosphoric acids, typically utilized at a concentration of about 4 oz to about 2 pt (about 0.095 to 0.95 l) per 100 gal (380 l); BUFFERCIDE from Custom Chemicals, which includes phosphoric acid, typically utilized at a concentration of about 1 to about 2 pt (about 0.47 to 0.951) per 100 gal (380 l), AERODYNE and PENETRATOR PLUS.

The formulations can be applied via the air or ground using known techniques, typically 5-30 gallons (19 - 114 l) per acre (0.4 ha) by ground or 1-5 gallons (3.8 - 19 l) per acre (0.4 ha) by air.

The amounts and proportions of components (B) and (C) above are preferred embodiments. It is contemplated that a range of about 0.1 to 1.0 % could be utilized in each case.

In a further aspect of the invention, there is provided a method for controlling the growth of undesirable vegetation such as weeds around the locus of a desired plant species such as corn, which comprises applying the above formulations to the locus of such vegetation. Examples of undesired vegetation are velvetleaf, redroot pigweed, common water hemp, Palmer amaranth, ivyleaf morning-glory, prickly sida, giant ragweed, common ragweed, common cocklebur, Eastern black nightshade, common lambsquarters, Pennsylvania smartweed, common sunflower, jimsonweed, hemp sesbania, toothed spurge, common purslane, large crabgrass, yellow foxtail and kochia.

### EXAMPLES

A series of trials was conducted to evaluate the effect or adjuvants on control of broadleaf weeds with mesotrione. This series included trials on planted weeds and indigenous weeds. Each trial was designed as a randomised complete block with 3 or more replications. Mesotrione was applied at 0.094 lb ai/A (105g/ha, 3 oz/A,) with MSO and COC at 1% v/v with and without UAN at 1 to 2.5% v/v and AMS at 8.5lb/100 gallons (about 1%) spray solution. Thirteen trials were conducted in 1999 in which 38 evaluations were made on broadleaved weeds including velvetleaf, redroot pigweed, common water hemp, Palmer amaranth, ivyleaf morning-glory, prickly sida, giant ragweed, common ragweed, common cocklebur, Eastern black nightshade, common lambsquarters, Pennsylvania smartweed, common sunflower, jimsonweed, hemp sesbania, toothed spurge, common purslane and kochia. The high levels of control observed with all treatments in 20 out of 38 of these datasets tends to mask adjuvant effects (see Table 1).

**Table 1**

| Effect of adjuvants on broadleaf weed control with mesotrione TRIAL DATA: H-99-US77-52 | | |
|---|---|---|
| | "All" Broadleaves, 14-36 DAA, 38 datasets | |
| | Mean Weed Control % | #>90% Consistency |
| Mesotrione 0.094 lb + MSO | 73 | 20 |
| Mesotrione 0.094 lb + MSO + UAN 1% | 78 | 21 |
| Mesotrione 0.094 lb + MSO + UAN 2.5% | 79 | 23 |
| Mesotrione 0.094 lb + MSO + AMS | 82 | 22 |
| Mesotrione 0.094 lb + COC | 75 | 22 |
| Mesotrione 0.094 lb + COC + UAN 1 % | 78 | 19 |
| Mesotrione 0.094 lb + COC + UAN 2.5% | 77 | 21 |
| Mesotrione 0.094 lb + COC + AMS | 75 | 20 |
| Mesotrione 0.094 lb + UAN 1% | 69 | 17 |
| Mesotrione 0.094 lb + UAN 2.5% | 71 | 22 |
| Mesotrione 0.094 lb + AMS | 69 | 19 |
| All herbicide rates are in pounds of active ingredient per acre (lb ai/A). 0.094 lb/A is about 105 g/ha | | |

Adjuvant rates are 1% MSO, 1% COC, 1 and 2.5% UAN and 8.5 lb/100 gal (about 1%) AMS.

The best demonstration of potential adjuvant effects is to concentrate on trials that were conducted under conditions which were not favourable for herbicidal activity or on weeds which are difficult to control with mesotrione applied alone. Mesotrione applied with the combination Of COC or MSO plus UAN or AMS gave significantly better weed Control than when applied with just COC or MSO (See Table 2).

Adjuvants also impact corn injury. This is best demonstrated by looking at the frequency of injury observed across a large number of field trials conducted between 1996 and 1999. These trials were all designed as randomised complete blocks with at least 3 replications. Mesotrione was applied at 0.094 lb ai/A (105g ai/ha) (3 oz/A) plus 1% v/v COC or MSO with and without UAN at 2.5% v/v or AMS at 8 to 17 lb/100 gallons (about 1-2%). Combinations of COC plus UAN or AMS result in fewer occurrences of crop injury than MSO plus UAN or AMS (See Table 3).

**TABLE 2**

| Effect of adjuvants from selected trials (adverse conditions (OH) and Difficult-to-control species (AMBEL and AMBTR)) TRIAL DATA; H-99-US77-52 | | | | | | |
|---|---|---|---|---|---|---|
| | *OH | *OH | WI | MN | IN | Average |
| | Velvetleaf ABUTH | Common Ragweed AMBEL | Common Ragweed AMBEL | Giant Ragweed AMBTR | Giant Ragweed AMBTR | |
| | | | | | | |
| | 28 DAA 6-8 leaf, 8-10" | 28 DAA 12-14 leaf, 5.5-7" | 32 DAA 8-9 leaf, 8-9" | 28 DAA 5 leaf, 2-6" | 28 DAA 9-10 leaf, 8-11" | |
| | | | | | | |
| Mesotrione 0.094 lb + MSO | 27 | 27 | 63 | 88 | 92 | 59 |
| Mesotrione 0.094 lb + MSO + UAN 1% | 73 | 80 | 83 | 93 | 99 | 86 |
| Mesotrione 0.094 lb + MS O + UAN 2.5% | 60 | 63 | 89 | 90 | 98 | 80 |
| Mesotrione 0.094 lb + MSO + AMS | 65 | 65 | 92 | 88 | 98 | 82 |
| Mesotrione 0.094 lb + COC | 47 | 57 | 71 | 68 | 92 | 67 |
| Mesotrione 0.094 lb + COC + UAN 1% | 70 | 73 | 81 | 83 | 80 | 77 |
| Mesotrione 0.094 lb + COC + UAN 2.5% | 60 | 60 | 91 | 94 | 89 | 79 |
| Mesotrione 0.094 lb + COC + AMS | 52 | 52 | 72 | 80 | 96 | 70 |
| Mesotrione 0.094 lb + UAN 1% | 23 | 27 | 65 | 72 | 82 | 54 |
| Mesotrione 0.094 lb + UAN 2.5% | 23 | 23 | 91 | 77 | 98 | 62 |
| Mesotrione 0.094 lb + AMS | 38 | 38 | 85 | 77 | 95 | 67 |
| 5% LSDs | 9 | 10 | 13 | 13 | 18 | |

| | | | | | | |
|---|---|---|---|---|---|---|
| *Drought conditions | | | | | | |

All herbicide rates in pounds of active ingredient per acre (lbai/A).

Adjuvant rates are 1% MSO, 1% COG, 1 and 2.5% UAN and 8.5 lb/100 gallon (about 1%) AMS

**TABLE 3**

| Effect of Adjuvant on Frequency of Corn Injury using 0.094 lb ai/A (105g/ha) mesotrione with various adjuvants | | | | | | | | | |
|---|---|---|---|---|---|---|---|---|---|
| | Frequency Distribution (% of trials in each range) Maximum Injury Observed (as %) | | | | | | | | |
| Adjuvant | mean | #trials | <5 | 5-10 | 10-15 | 15-20 | 20-25 | 25-30 | >30 |
| COC 1 % | 0.6 | 60 | 98 | 2 | 0 | 0 | 0 | 0 | 0 |
| COC 1% + UAN 2.5% | 1.8 | 101 | 90 | 6 | 3 | 0 | 1 | 0 | 0 |
| COC 1% + AMS | 1.6 | 15 | 80 | 20 | 0 | 0 | 0 | 0 | 0 |
| MSO 1% | 0.6 | 29 | 100 | 0 | 0 | 0 | 0 | 0 | 0 |
| MSO 1% + UAN 2.5% | 3.0 | 38 | 76 | 11 | 5 | 8 | 0 | 0 | 0 |
| MSO 1% + AMS | 5.5 | 25 | 68 | 8 | 4 | 12 | 4 | 4 | 0 |

### Examples of Preferred formulations based on 100 gallons (379 l) of formulated solution for Typical 10 gallon (38 l) per acre (0,4 ha) application

1. (A) 30 ounces (850g) of (2-[4-methylsulfonyl-2-nitrobenzoyl]-1,3-cyclohexanedione),
   (B) 1 gallon (3.8 l) of crop oil concentrate,
   (C) 1.5 gallons (5.71) of urea ammonium nitrate, and
   (D) the balance water
2 (A) 30 ounces (850g) of (2-[4-methylsulfonyl-2-nitrobenzol]-1,3-cyclohexanedione),
   (B) 1 gallon (3.81) of methylated seed oil,
   (C) 17 lbs (7.7 Kg) of ammonium sulphate fertilizer, and
   (D) the balance water
3. (A) 30 ounces (850g) of (2-[4-methylsulfonyl-2-nitrobenzoyl]-1,3-cyclohexanedione),
   (B) 1 gallon (3.8 l) of crop oil concentrate,
   (C) 1.5 gallons (5.7 l) of urea ammonium nitrate, and
   (D) the balance water

## Claims

1. A herbicidal formulation comprising
(A) mesotrione (2-[4-methylsulfonyl-2-nitrobenzoyl]-1,3-cyclohexanedione);
(B) about 0.3 to about 2.5 percent of crop oil concentrate, or about 0.3 to about 2.5 percent of methylated seed oil, on a volume to volume basis, based on the total of (A), (B); (C) and (D),
(C) about 0.5 to about 5% of a urea ammonium nitrate on a volume to volume basis, based on the total of (A), (B), (C) and (D), or about 0.5 to 5% based on dry weight, of ammonium sulphate fertilizer, based on the total weight of (A), (B), (C) and (D), and
(D) a diluent

2. The formulation of claim 1, comprising about 0.5 to 2.0 % crop oil concentrate.

3. The formulation of claim 1, comprising about 1 % crop oil concentrate.

4. The formulation of claim 1, comprising about 0.5 to 2.0% methylated seed oiL

5. The formulation of claim 1, comprising about 1% methylated seed oiL

6. The formulation of claim 1, comprising about 1 to 3% urea ammonium nitrate fertilizer.

7. The formulation of claim 1, comprising about 0.5 to 2 % ammonium sulphate fertilizer.

8. A herbicidal formulation, on the basis of a 100 gallon solution, comprising
(A) about 30 ounces (850 g) of (2-[4-methylsulfonyl-2-nitrobenzoyl]-1,3-cyclohexanedione),
(B) about 1 gallon (3,8 L) of crop oil concentrate or 1 gallon of methylated seed oil or a blend thereof,
(C) about 1.5 gallons (5,7 L) of a urea ammonium nitrate on a volume to volume basis or about 17 lbs (7,7 kg) of ammonium sulphate fertilizer, and
(D) the balance water.

9. A method for controlling the growth of undesired vegetation around the locus of a desired plant, which comprises applying the formulation of claim 1 to the locus of said vegetation.

10. The method of claim 9 in which the desired plant is corn.

11. The method of claim 10, wherein said undesired vegetation is selected form the group comprising velvetleaf, redroot pigweed, common waterhemp, Palmer amaranth, ivyleaf morningglory, prickly sida, giant ragweed, common ragweed, common cocklebur, Eastern black nightshade, common lambsquarters, Pennsylvania smartweed, common sunflower, jimsonweed, hemp sesbania, toothed spurge, common puslane, large crabgrass, yellow foxtail and Kochia.

## Patentansprüche

1. Herbizide Formulierung, die folgendes umfaßt:
(A) Mesotrion (2-[4-Methylsulfonyl-2-nitrobenzoyl]-1,3-cyclohexandion),
(B) circa 0,3 bis circa 2,5 %
Pflanzenschutzölkonzentrat ("Crop Oil Concentrate") oder circa 0,3 bis circa 2,5 % methyliertes Samenöl ("Methylated Seed Oil") auf Volumen/Volumen-Basis, bezogen auf die Gesamtheit aus (A), (B), (C) und (D),
(C) circa 0,5 bis circa 5 % eines
Harnstoffammoniumnitrats auf Volumen/Volumen-Basis, bezogen auf die Gesamtheit aus (A), (B), (C) und (D), oder circa 0,5 bis 5 Trockengewichts-% Ammoniumsulfat-Düngemittel, bezogen auf das Gesamtgewicht von (A), (B), (C) und (D), und
(D) ein Verdünnungsmittel.

2. Formulierung gemäß Anspruch 1, die circa 0,5 bis 2,0 % Pflanzenschutzölkonzentrat umfaßt.

3. Formulierung gemäß Anspruch 1, die circa 1 % Pflanzenschutzölkonzentrat umfaßt.

4. Formulierung gemäß Anspruch 1, die circa 0,5 bis 2,0 % methyliertes Samenöl umfaßt.

5. Formulierung gemäß Anspruch 1, die circa 1 % methyliertes Samenöl umfaßt.

6. Formulierung gemäß Anspruch 1, die circa 1 bis 3 % Harnstoffammoniumnitrat-Düngemittel umfaßt.

7. Formulierung gemäß Anspruch 1, die circa 0,5 bis 2 % Ammoniumsulfat-Düngemittel umfaßt.

8. Herbizide Formulierung auf Basis einer 100 Gallonen-Lösung, die folgendes umfaßt:
(A) circa 30 Unzen (850 g) 2-[4-Methylsulfonyl-2-nitrobenzoyl]-1,3-cyclohexandion,
(B) circa 1 Gallone (3,8 1) Pflanzenschutzölkonzentrat oder 1 Gallone methyliertes Samenöl oder eine Mischung daraus,
(C) circa 1,5 Gallonen (5,7 1) eines
Harnstoffammoniumnitrats auf Volumen/Volumen-Basis oder circa 17 lbs (7,7 kg) Ammoniumsulfat-Düngemittel und
(D) Rest Wasser.

9. Verfahren zur Kontrolle des Wachstums von unerwünschter Vegetation um den Locus einer gewünschten Pflanze herum, welches das Ausbringen der Formulierung gemäß Anspruch 1 auf den Locus der Vegetation umfaßt.

10. Verfahren gemäß Anspruch 9, worin die gewünschte Pflanze Mais ist.

11. Verfahren gemäß Anspruch 10, worin die unerwünschte Vegetation aus der Gruppe ausgewählt ist, die Abutilon theophrasti ("velvetleaf"), Amarathus retroflexus ("redroot pigweed"), gemeinen Wasserdorst, Palmer-Amaranth, efeublättrige Prunkwinde ("ivyleaf morningglory"), Sida spinosa ("prickly sida"), Ambrosia trifida ("giant ragweed"), Ambrosia artemisiifolia ("common ragweed"), Xanthium pensylvanicum ("common cocklebur"), östlichen schwarzen Nachtschatten ("Eastern black nightshade"), gemeine Melde ("common lambsquarters"), Polygonum pensylvanicum ("Pennsylvania smartweed"), Sonnenblume, Stechapfel, Sesbania exaltata, Euphorbia dentata, Portulak, große Unkrauthirse ("large crabgrass"), gelben Fuchsschwanz und Kochia umfaßt.

## Revendications

1. Formulation herbicide comprenant
(A) de la mésitrione (2-[4-méthylsulfonyl-2-nitrobenzoyl]-1,3-cyclohexadione) ;
(B) environ 0,3 à environ 2,5 % d'un concentré d'huile minérale, ou environ 0,3 à environ 2,5 % d'une huile végétale méthylée, en volume/volume, par rapport à la somme de (A), B), (C) et (D),
(C) environ 0,5 à environ 5 % de nitrate d'ammonium urée en volume/volume, par rapport à la somme de (A), B), (C) et (D), ou environ 0,5 à 5 %, exprimé par rapport à la matière sèche, d'un engrais à base de sulfate d'ammonium, par rapport à la masse totale de (A), B), (C) et (D), et
(D) un diluant.

2. Formulation selon la revendication 1, comprenant environ 0,5 à 2,0 % d'un concentré d'huile minérale.

3. Formulation selon la revendication 1 comprenant environ 1 % d'un concentré d'huile minérale.

4. Formulation selon la revendication 1, comprenant environ 0,5 à 2,0 % d'une huile végétale méthylée.

5. Formulation selon la revendication 1 comprenant environ 1 % d'une huile végétale méthylée.

6. Formulation selon la revendication 1, comprenant environ 1 à 3 % d'engrais à base de nitrate d'ammonium urée.

7. Formulation selon la revendication 1, comprenant environ 0,5 à 2 % d'engrais à base de sulfate d'ammonium.

8. Formulation herbicide, sur la base d'une solution de 100 gallons, comprenant
(A) environ 30 onces (850 g) de (2-[4-méthylsulfonyl-2-nitrobenzoyl]-1,3-cyclohexadione),
(B) environ 1 gallon (3,8 litres) d'un concentré d'huile minérale ou 1 gallon d'une huile végétale méthylée, ou d'un mélange de ceux-ci,
(C)environ 1,5 gallon (5,7 litres) de nitrate d'ammonium urée en volume/volume ou environ 17 livres (7,7 kg), d'un engrais à base de sulfate d'ammonium, et
(D) de l'eau pour la partie restante.

9. Méthode pour lutter contre la croissance d'une végétation indésirable autour du lieu de culture d'une plante désirée, comprenant l'application de la formulation selon la revendication 1 au lieu de croissance de ladite végétation.

10. Méthode selon la revendication 9, dans laquelle la plante désirée est le maïs.

11. Méthode selon la revendication 10, dans laquelle ladite végétation indésirable est choisie dans le groupe constitué par la mauve velours, l'amarante à racine rouge, l'origan des marais, l'amarante de Palmer, l'ipomée à feuille de lierre, le Sida spinosa, l'ambroisie géante, l'ambroisie commune, le chardon commun, la morelle noire de l'Est, l'ansérine commune, la renouée de Pennsylvanie, le tournesol commun, la stramoine commune, le Sesbania exaltata, l'euphorbe denté, le pourpier commun, la digitaire sanguine, la sétaire jaune et le kochia.
